# EUROPÄISCHE PATENTSCHRIFT

(11) **EP 2 500 710 B1**
(45) Veröffentlichungstag und Bekanntmachung des Hinweises auf die Patenterteilung: **19.09.2018**
(21) Anmeldenummer: 12158620.0
(22) Anmeldetag: 08.03.2012
(51) Int. Cl.: G01N 21/15, G01N 21/53

(54) **Streulichtmessgerät**
Light scattering measuring device
Scatteromètre

(30) Priorität: 15.03.2011 AT 1512011 U
(43) Veröffentlichungstag der Anmeldung: 19.09.2012
(73) Patentinhaber: AVL List GmbH, 8020 Graz (AT)
(72) Erfinder: Bergmann, Alexander, 8052 Graz (AT)
(74) Vertreter: Patentanwälte Pinter & Weiss OG

(56) Entgegenhaltungen:
- EP-A1- 0 159 157
- WO-A1-87/06697
- US-A- 5 424 842

## Beschreibung

Die Erfindung betrifft ein Streulichtmessgerät, insbesonders zur kontinuierlichen Messung der Partikelkonzentration im Abgas von Brennkraftmaschinen, mit einer ein Messvolumen umgebenden Messkammer, die für partikelbeladenes Messgas eine Zuleitung mit Zuführdüse zum Messvolumen und eine Ableitung vom Messvolumen, eine Lichtquelle zum Einstrahlen von Licht in das Messvolumen mit zugehöriger im Strahlweg gegenüberliegender Lichtsenke, und zumindest eine von seitlich auf das im Strahlweg liegende Messvolumen gerichtete Detektoranordnung für das von den Partikeln im Messvolumen gestreute Streulicht aufweist, wobei der Lichtquelle und der Detektoranordnung optische Fenster zugeordnet sind, die an der Messkammer angeordnet sind.

Da die heutzutage noch üblichen Geräte zur Messung von Partikelkonzentrationen, wie sie beispielsweise auch zur Abgasmessung an Dieselmotoren als Antriebsmaschinen für Fahrzeuge verwendet werden, nicht mehr die notwendige Sensitivität zur Vermessung des Abgases moderner Brennkraftmaschinen aufweisen, sind Messgeräte der eingangs genannten Art entwickelt und bekannt geworden, deren Ziel es ist, beispielsweise auch an mit Partikelfiltern ausgerüsteten Fahrzeugen aussagekräftige Messung durchführen und damit die korrekte Funktion des Partikelfilters gewährleisten zu können. Deren Messprinzip beruht im wesentlichen auf der statischen Lichtstreuung, wobei die Partikel von einem gebündelten, zumeist roten Laserstrahl (Wellenlänge beispielsweise 632 oder 650 nm) beleuchtet werden und das einstrahlende Licht in alle Richtungen streuen. Das Streulicht wird an einem oder mehreren Winkeln mit oder ohne Polarisatoren gemessen und die Streulichtintensität bzw. die polarisierte Streulichtintensität dann in eine Massenkonzentration oder den in der Opazitätsmessung verwendeten Absorptionskoeffizienten umgerechnet. Es wird dabei immer eine Partikelwolke angestrahlt, anders als bei der ebenfalls mit Streulicht durchgeführten Partikelzählung, bei der die Partikel zuerst stark verdünnt und dann durch Kondensation vergrößert und einzeln gezählt werden.

Die US 5,424,842 A zeigt einen Aufbau mit welchem eine Lösung für die Problematik der Verschmutzung der optischen Elemente bei der Bestimmung der Partikeldichte in Gasen mithilfe der Streulichtdetektion vorgestellt wird. Dabei wird mithilfe des Venturieffektes gefilterte Umgebungsluft an den optischen Elementen vorbeigeführt, wodurch der Kontakt mit partikelbehaftetem Gas verhindert wird. Die Nutzung der Umgebungsluft führt jedoch zwangsläufig zu einer unterschiedlichen Zusammensetzung von Spülluft, welche an den optischen Elementen vorbeigeführt wird, und Messgas, was sich, durch die Möglichkeit der Bildung von Artefakten an der Grenzschicht und damit verbundenen optischen Effekten, negativ auf die Messung auswirken kann.

Auch die EP 0 159 157 A1 zeigt einen Aufbau, bei dem mithilfe von Lichtstreuung auf eine Partikelbelastung eines Messgases geschlossen wird, und bei dem gefilterte Umgebungsluft dazu genutzt wird, optische Elemente, die abseits vom eigentlichen Messvolumen angeordnet sind, vor Verschmutzung zu schützen, wobei das Hauptaugenmerk auf die Möglichkeit der Filterreinigung ohne notwendigen Ausbau liegt.

Die WO 87/06697 A1 offenbart ein Streulichtmessgerät bei dem der Messgasstrahl, innerhalb einer, das Messvolumen umgebenden Messkammer, vom Strahlgang eines Lasers gequert wird. Infolge wird das an den im Messgas befindlichen Partikeln gestreute Licht detektiert, wodurch Rückschlüsse auf die Partikelmenge im Messgas möglich sind. Um das Messgas durch den Laserstrahl zu führen, wird eine stark ovalisierte Düse mit vom Volumenstrom abhängiger Länge verwendet, die eine laminare Strömung des Messgases durch das Messvolumen sicherstellen soll, um Messverfälschungen durch Verwirbelungen zu vermeiden.

Der eigentliche Messgasstrom wird von einem ersten, gefilterten Teil des Messgases umspült, die optischen Ein- und Auskoppelfenster des Lasers, die abseits des Messvolumens angeordnet sind und nicht mit dem Messgas in Kontakt kommen können, werden von einem zweiten gefilterten Teil des Messgases umspült.

Speziell problematisch ist bei den bekannten Streulichtmessgeräten der genannten Art die Verschmutzung der optischen Bereiche (Lichteinlass, Lichtauslass, Dektektorfenster) durch den Partikelstrom während der Messung, da die typischerweise äußerst geringen nachzuweisenden Partikelkonzentrationen bereits durch geringste Verschmutzungen dieser Bereiche unzulässig fehlerhaft bzw. damit unsicher sein können. Nicht von den streuenden Partikeln im Messgas her stammende optische Artefakte müssen möglichst vermieden werden, da nur so den Messwerten der geringen Partikelkonzentrationen die notwendige Relevanz zuerkannt werden kann.

Diese Aufgabe wird bei einem Streulichtmessgerät der eingangs genannten Art dadurch gelöst, dass vor der Zuleitung des partikelbeladenen Messgases zum Messvolumen eine Leitung zum Abzweigen eines Teils des partikelbeladenen Messgases angeordnet ist und eine Filteranordnung zur Entfernung zumindest eines Großteils der Partikel aus dem abgezweigten partikelbeladenen Messgas angeordnet ist, wobei partikelbefreites Gas aus der Filteranordnung die Zuführdüse für das verbliebene, partikelbeladene Messgas in einem im wesentlichen ringförmigen Spülraum umgibt, wobei das partikelbeladene Messgas nach der Ausmündung der Zufuhrdüse zum Messvolumen vom partikelbefreiten Gas umgebbar ist, und das Messvolumen von der Lichtquelle, der Lichtsenke und der Detektoranordnung und von den zugeordneten optischen Fenstern, die vom partikelbefreiten Gas überströmt sind, abgegrenzt ist.

In weiterer Ausgestaltung dieser Erfindung ist vorgesehen, dass die Zuführdüse an einem in die im wesentlichen zylindrische Messkammer eingesetzten Zuführteil ausgebildet ist, welcher an der der Ausmündung zum Messvolumen gegenüberliegenden Außenseite Austrittsöffnungen für die Abzweigung des zu filternden Messgases aufweist. Damit kann dieser Zuführteil leicht aus der Messkammer entfernt und bedarfsweise gereinigt werden, wobei trotzdem sichergestellt bleibt, dass das abgezweigte, zu filternde Gas dieselben chemischen und physikalischen Parameter (Temperatur) wie das weiter zur Ausmündung der Zuführdüse strömende Messgas aufweist.

In weiters bevorzugter Ausgestaltung der Erfindung weist die Filteranordnung eine von außen wechselbare Filterpatrone auf, sodass die natürlich in gewissen Abständen notwendige Entfernung und/oder Reinigung der partikelbeladenen Filterpatrone einfach möglich ist.

Die Filteranordnung und vorzugsweise auch weitere Bereiche der Messkammer können in weiterer Ausgestaltung der Erfindung beheizbar sein, vorzugsweise mittels auf die Außenflächen aufgesetzter elektrischer Widerstandsheizkörper. Das zumeist zur Eliminierung von Kondensat vor der Zuführung zur Messkammer auf etwa 150 °C aufgeheizte Messgas kommt damit in eine ebenso aufgeheizte Messkammer, wobei hier üblicherweise eine niedrigere Temperatur ausreicht um Rückkondensation zu verhindern.

Zur Einkoppelung von Licht aus der Lichtquelle sowie zum Auskoppeln zur Detektoranordnung sind in weiterer Ausgestaltung der Erfindung Lichtleiter, vorzugsweise mit Linsenoptikvorsätzen vorgesehen, was Temperaturein- und -austrag stark verringert und eine einfache Anbringung von Lichtquelle und Detektor selbst ermöglicht.

In weiterer Ausgestaltung der Erfindung ist an der Messkammer, vorzugsweise gegenüber dem eingesetzten Zuführteil, ein Kalibrierelement vorgesehen, welches bedarfsweise mit einem definierte Streuung aufweisenden Streuelement in das Messvolumen einbringbar ist, was die Kalibrierung der Streulichtmessung auf einfachste Weise auch zwischen einzelnen Messungen ermöglicht.

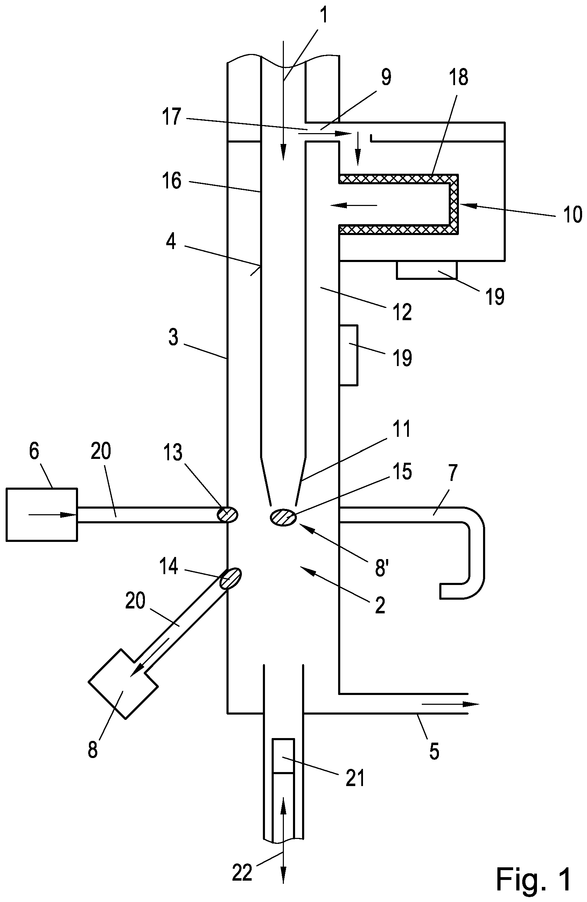

Die Erfindung wird im Folgenden noch anhand des in Fig. 1 schematisch dargestellten Streulichtmessgerätes näher erläutert.

Das dargestellte Streulichtmessgerät ist beispielsweise zur kontinuierlichen Messung der Partikelkonzentration im Abgas von Brennkraftmaschinen geeignet, wobei dieses Abgas über eine hier nicht dargestellte Sonde beispielsweise am Auspuffende der Brennkraftmaschine entnommen und über den Pfeil 1 dem Gerät zugeführt werden kann. Dieses besteht im wesentlichen aus einer ein Messvolumen 2 umgebenden Messkammer 3, welche eine Zuleitung 4 und Ableitung 5 für das partikelbeladene Messgas zum bzw. vom Messvolumen 2, eine Lichtquelle 6 mit zugehöriger im Strahlweg gegenüberliegender Lichtsenke 7, und zumindest eine von seitlich auf das im Strahlweg liegende Messvolumen 2 gerichtete Detektoranordnung 8 für das von den Partikeln im Messvolumen gestreute Streulicht aufweist. Die Detektoranordnung 8 ist dabei hier etwa 45° zur Richtung des von der Lichtquelle 6 kommenden Lichtes nach hinten versetzt angeordnet - eine weitere Detektoranordnung 8' (hier nur über das optische Fenster 15 angedeutet) ist seitlich so angeordnet, dass sie etwa senkrecht zum eintretenden Licht gestreutes Streulicht detektiert.

Vor der Zuleitung 4 des partikelbeladenen Messgases zum Messvolumen 2 wird ein Teil davon über eine Leitung 9 abgezweigt und durch eine Filteranordnung 10 geführt, in der zumindest ein Großteil der Partikel entfernt wird. Anschließend an die Filteranordnung 10 wird das partikelbefreite Gas einem eine Zuführdüse 11 an der Zuleitung 4 für das verbliebene, partikelbeladene Messgas im wesentlichen ringförmig umgebenden Spülraum 12 zugeführt, womit das partikelbefreite Gas nach der Ausmündung der Zuführdüse 11 zum Messvolumen 2 das partikelbeladene Messgas umgibt und damit das eigentliche Messvolumen von Lichtquelle 6 und Lichtsenke 7 und auch der Detektoranordnung 8, 8' abgrenzt. Eine Verschmutzung der optischen Fenster 13, 14 und 15 sowie auch des Eintrittes zur Lichtsenke 7 durch das partikelbeladene Messgas ist damit im wesentlichen ausgeschlossen bzw. zumindest stark verringert.

Die Zuführdüse 11 kann an einem in die im wesentlichen zylindrische Messkammer 3 separat eingesetzten Zuführteil 16 der Zuleitung 4 ausgebildet sein, welche an der der Ausmündung zum Messvolumen 2 gegenüberliegenden Außenseite zumindest eine Austrittsöffnung 17 für die Abzweigung des zu filternden Messgases in die Leitung 9 aufweist. Dieser Zuführteil 16 kann auf hier nicht dargestellte Weise damit leicht aus der Messkammer 3 ausgebaut werden - beispielsweise zur Reinigung.

Die Filteranordnung 10 kann eine in nicht dargestellter Weise von außen wechselbare Filterpatrone 18 aufweisen, was ebenfalls den Austausch bzw. die Reinigung der mit der Zeit von den Partikeln im Messgas verunreinigten Elemente ermöglicht.

Die Filteranordnung 10 und vorzugsweise weitere Bereiche der Messkammer 3 sind mittels auf die Außenflächen aufgesetzter elektrischer Widerstandsheizkörper 19 beheizbar um Kondensation im Messgas bzw. Spülgas zu verhindern. Wichtig ist auch, dass die Messkammer 3 und die Filteranordnung 10 auf im wesentlichen gleiche Temperatur beheizt werden, um Schlierenbildung durch Dichteunterschiede an der Grenzschicht zwischen Messgas und Spülgas zu verhindern. Die optischen Fenster 13, 14 und 15 können als Linsenoptikvorsätze am Ende von Lichtleitern 20 ausgebildet sein, welche Lichtquelle 6 und Detektoranordnung 8, 8' verbinden, was Temperaturein- bzw. -austrag verhindert.

In der Messkammer 3 kann weiters ein Kalibrierelement 21 vorgesehen sein, vorzugsweise gegenüber dem eingesetzten Zuführteil 16 im Bereich der Ableitung 5. Dieses Kalibrierelement 21 ist bedarfsweise mittels einer hier nicht dargestellten Vorrichtung entlang des Pfeiles 22 mit einem definierte Streuung aufweisenden Streuelement in das Messvolumen 2 einbringbar, womit die Streulichtmessung kalibrierbar ist.

## Patentansprüche

1. Streulichtmessgerät, insbesonders zur kontinuierlichen Messung der Partikelkonzentration im Abgas von Brennkraftmaschinen, mit einer ein Messvolumen (2) umgebenden Messkammer (3), welche
• für partikelbeladenes Messgas eine Zuleitung (4) mit Zuführdüse (11) zum Messvolumen (2) und eine Ableitung (5) vom Messvolumen (2),
• eine Lichtquelle (6) zum Einstrahlen von Licht in das Messvolumen (2) mit zugehöriger im Strahlweg gegenüberliegender Lichtsenke (7), und
• zumindest eine von seitlich auf das im Strahlweg liegende Messvolumen (2) gerichtete Detektoranordnung (8, 8') für das von den Partikeln im Messvolumen (2) gestreute Streulicht aufweist,
• wobei der Lichtquelle (6) und der Detektoranordnung (8, 8') optische Fenster (13, 14, 15) zugeordnet sind, die an der Messkammer (3) angeordnet sind,
wobei vor der Zuleitung (4) des partikelbeladenen Messgases zum Messvolumen (2) eine Leitung (9) zum Abzweigen eines Teils des partikelbeladenen Messgases angeordnet ist und eine Filteranordnung (10) zur Entfernung zumindest eines Großteils der Partikel aus dem abgezweigten partikelbeladenen Messgas angeordnet ist, wobei partikelbefreites Gas aus der Filteranordnung (10) die Zuführdüse (11) für das verbliebene, partikelbeladene Messgas in einem im wesentlichen ringförmigen Spülraum (12) umgibt, wobei das partikelbeladene Messgas nach der Ausmündung der Zufuhrdüse (11) zum Messvolumen (2) vom partikelbefreiten Gas umgebbar ist, und das Messvolumen (2) von der Lichtquelle (6), der Lichtsenke (7) und der Detektoranordnung (8, 8') und von den zugeordneten optischen Fenstern (13, 14, 15), die vom partikelbefreiten Gas überströmt sind, abgegrenzt ist.

2. Streulichtmessgerät nach Anspruch 1, **dadurch gekennzeichnet, dass** die Zuführdüse (11) an einem in die im wesentlichen zylindrische Messkammer (3) eingesetzten Zuführteil (16) ausgebildet ist, welcher an der der Ausmündung zum Messvolumen (2) gegenüberliegenden Außenseite Austrittsöffnungen (17) für die Abzweigung des zu filternden Messgases aufweist.

3. Streulichtmessgerät nach Anspruch 1 oder 2, **dadurch gekennzeichnet, dass** die Filteranordnung (10) eine von außen wechselbare Filterpatrone (18) aufweist.

4. Streulichtmessgerät nach einem der Ansprüche 1 bis 3, **dadurch gekennzeichnet, dass** die Filteranordnung (10) und vorzugsweise auch weitere Bereiche der Messkammer (3) beheizbar sind, vorzugsweise mittels auf die Außenflächen aufgesetzter elektrischer Widerstandheizkörper (19).

5. Streulichtmessgerät nach einem oder mehreren der Ansprüche 1 bis 4, **dadurch gekennzeichnet, dass** zur Einkoppelung von Licht aus der Lichtquelle (6) sowie zum Auskoppeln zur Detektoranordnung (8, 8') Lichtleiter, vorzugsweise mit Linsenoptikvorsätzen (13, 14, 15) vorgesehen sind.

6. Streulichtmessgerät nach einem oder mehreren der Ansprüche 2 bis 5, **dadurch gekennzeichnet, dass** in der Messkammer (3), vorzugsweise gegenüber dem eingesetzten Zuführteil (16), ein Kalibrierelement (21) vorgesehen ist, welches bedarfsweise mit einem definierte Streuung aufweisenden Streuelement in das Messvolumen (2) einbringbar ist.

## Claims

1. Scattered light measuring device, in particular for continuously measuring the particle concentration in the exhaust gas from internal combustion engines, comprising a measuring chamber (3) surrounding a measuring volume (2), which measuring chamber comprises:
• a supply line (4) comprising a supply nozzle (11) to the measuring volume (2) and a discharge line (5) from the measuring volume (2), for particle-laden gas to be measured,
• a light source (6) for irradiating light into the measuring volume (2), comprising an associated light sink (7) that is opposite said light source in the beam path, and
• at least one detector arrangement (8, 8'), directed from the side toward the measuring volume (2) located in the beam path, for the scattered light scattered by the particles in the measuring volume (2),
• wherein optical windows (13, 14, 15) are assigned to the light source (6) and the detector arrangement (8, 8'), which optical windows (13, 14, 15) are arranged on the measuring chamber (3),
wherein a line (9) for branching off some of the particle-laden gas to be measured and a filter arrangement (10) for removing at least the majority of the particles from the branched-off particle-laden gas to be measured are arranged upstream of the supply line (4) of the particle-laden gas to be measured to the measuring volume (2), wherein particle-free gas from the filter arrangement (10) surrounds the supply nozzle (11) for the residual particle-laden gas to be measured in a substantially annular flushing chamber (12), wherein the particle-laden gas to be measured can be surrounded by the particle-free gas downstream of the discharge of the supply nozzle (11) to the measuring volume (2), and the measuring volume (2) is delimited by the light source (6), the light sink (7) and the detector arrangement (8, 8') and by the associated optical windows (13, 14, 15), over which the particle-free gas flows.

2. Scattered light measuring device according to claim 1, **characterized in that** the supply nozzle (11) is formed on a supply part (16) that is inserted into the substantially cylindrical measuring chamber (3) and that comprises outlet openings (17) for branching off the gas to be measured to be filtered on the outer side opposite the discharge to the measuring volume (2).

3. Scattered light measuring device according to either claim 1 or claim 2, **characterized in that** the filter arrangement (10) comprises a filter cartridge (18) that can be changed from the outside.

4. Scattered light measuring device according to any of claims 1 to 3, **characterized in that** the filter arrangement (10), and preferably also additional regions of the measuring chamber (3), can be heated, preferably by means of electrical resistance heating elements (19) placed on the outer surfaces.

5. Scattered light measuring device according to one or more of claims 1 to 4, **characterized in that** optical waveguides, preferably having optical lens adapters (13, 14, 15) are provided for coupling in light from the light source (6) and for decoupling said light from the detector arrangement (8, 8').

6. Scattered light measuring device according to one or more of claims 2 to 5, **characterized in that** a calibration element (21) is provided in the measuring chamber (3), preferably opposite the inserted supply part (16), which calibration element (21) can, if necessary, be inserted into the measuring volume (2) together with a scattering element having defined scattering properties.

## Revendications

1. Appareil de mesure de lumière dispersée, en particulier pour la mesure continue de la concentration de particules dans les gaz d'échappement de moteurs à combustion interne, avec une chambre de mesure (3) entourant un volume de mesure (2), laquelle présente
• pour un gaz de mesure chargé de particules, une alimentation (4) avec une buse d'amenée (11) pour le volume de mesure (2) et une conduite d'extraction (5) du volume de mesure (2),
• une source de lumière (6) pour la diffusion de lumière dans le volume de mesure (2) avec une cavité optique (7) intégrée faisant face au faisceau de lumière, et
• au moins un système de détecteur (8, 8') dirigé dans le volume de mesure (2) situé dans le faisceau de lumière sur le côté pour la lumière dispersée diffusée par les particules dans le volume de mesure (2),
• dans lequel des fenêtres optiques (13, 14, 15) sont associées à la source de lumière (6) et au système de détecteur (8, 8'), et sont disposées au niveau de la chambre de mesure (3),
dans lequel une conduite (9) pour la bifurcation d'une partie du gaz de mesure chargé de particules est disposée devant l'alimentation (4) du gaz de mesure chargé de particules pour le volume de mesure (2) et une disposition de filtres (10) pour éliminer d'au moins une grande partie des particules du gaz de mesure chargé de particules est disposée, du gaz libéré des particules depuis la disposition de filtres (10) entourant la buse d'amenée (11) pour le gaz de mesure restant chargé de particules dans une chambre de rinçage (12) fondamentalement en forme d'anneau, le gaz de mesure chargé de particules pouvant être entouré de gaz libéré des particules après l'acheminement de la buse d'amenée (11) dans le volume de mesure (2), et le volume de mesure (2) étant délimité par la source de lumière (6), la cavité optique (7) et le système de détecteur (8, 8'), et par les fenêtres optiques agencées (13, 14, 15) qui sont introduites par le gaz libéré des particules.

2. Appareil de mesure de lumière dispersée selon la revendication 1, **caractérisé en ce que** la buse d'amenée (11) est formée au niveau d'une zone d'alimentation (16) engagée dans la chambre de mesure (3) fondamentalement cylindrique, laquelle présente des ouvertures de sortie (17) pour la bifurcation du gaz de mesure à filtrer au niveau du côté extérieur faisant face à l'acheminement vers le volume de mesure (2).

3. Appareil de mesure de lumière dispersée selon la revendication 1 ou 2, **caractérisé en ce que** la disposition de filtres (10) présente une cartouche filtrante (18) changeable de l'extérieur.

4. Appareil de mesure de lumière dispersée selon l'une des revendications 1 à 3, **caractérisé en ce que** la disposition de filtres (10) et de préférence également d'autres zones de la chambre de mesure (3) peuvent être chauffées, de préférence au moyen d'un corps de chauffe à résistance (19).

5. Appareil de mesure de lumière dispersée selon une ou plusieurs des revendications 1 à 4, **caractérisé en ce que** des conducteurs optiques, de préférence avec des accessoires optiques à lentille (13, 14, 15), sont prévus pour le couplage de la lumière de la source de lumière (6) ainsi que pour le découplage pour le système de détecteur (8, 8').

6. Appareil de mesure de lumière dispersée selon une ou plusieurs des revendications 2 à 5, **caractérisé en ce qu'**un élément d'étalonnage (21) est prévu dans la chambre de mesure (3), de préférence face à la zone d'alimentation utilisée (16), lequel peut être apporté au besoin dans le volume de mesure (2) avec un élément de diffusion présentant une diffusion définie.
